# EUROPEAN PATENT SPECIFICATION

(11) **EP 3 770 284 B1**
(45) Date of publication and mention of the grant of the patent: **10.07.2024**
(21) Application number: 19770841.5
(22) Date of filing: 18.03.2019
(51) Int. Cl.: C21D 1/10, C21D 1/18, C21D 9/28, C21D 1/667, C21D 9/00, H05B 6/44

(54) **TRAVERSE HARDENING DEVICE AND TRAVERSE HARDENING METHOD**
VORSCHUBHÄRTUNGSVORRICHTUNG UND VORSCHUBHÄRTUNGSVERFAHREN
DISPOSITIF DE DURCISSEMENT TRANSVERSAL ET PROCÉDÉ DE DURCISSEMENT TRANSVERSAL

(30) Priority: 22.03.2018 JP 2018055216
(43) Date of publication of application: 27.01.2021
(73) Proprietor: NIPPON STEEL CORPORATION, Chiyoda-ku Tokyo 100-8071 (JP)
(72) Inventor: YAMANE Akihito, Tokyo 100-8071 (JP); HATA Toshiyuki, Tokyo 100-8071 (JP); KOZUKA Chihiro, Tokyo 100-8071 (JP)
(74) Representative: Zimmermann & Partner Patentanwälte mbB
(86) International application number: PCT/JP2019/011276
(87) International publication number: WO 2019/181889

(56) References cited:
- EP-A1- 3 048 859
- WO-A1-2005/107324
- JP-A- 2000 087 134
- JP-A- 2015 108 188
- JP-A- 2015 108 188
- JP-A- S4 837 742
- JP-A- S4 837 742
- US-A1- 2010 163 551

## Description

### [Technical Field of the Invention]

The present invention relates to a traverse hardening device and a traverse hardening method.

Priority is claimed on Japanese Patent Application No. 2018-055216 filed in Japan on March 22, 2018.

### [Related Art]

Conventionally, a shaft-like body has been subjected to traverse hardening by induction heating to increase a fatigue strength of the shaft-like body. "Traverse hardening (traverse hardening)" as used herein means performing hardening while moving a coil member or the like in an axial direction with respect to a shaft-like body.

In induction heating, a shaft-like body is inserted into a primary coil member formed in an annular shape, and a high-frequency current is caused to flow in the primary coil member to heat the shaft-like body using induction heating. In induction heating, a shaft-like body is more efficiently heated as a distance (air gap) between the shaft-like body and the primary coil member becomes smaller. Therefore, when a shaft-like body includes a main body part and a small-diameter part provided in the main body part and having a smaller diameter than the main body part, there is a problem that the small-diameter part is not easily heated compared to the main body part.

In regard to this problem, a traverse hardening device including a secondary coil member having an outer diameter smaller than an inner diameter of a primary coil member on an inner side of the primary coil member has been proposed (see Patent Documents 1 to 3, for example). In these traverse hardening devices, since a plurality of coil members are concentrically disposed, air gaps in a circumferential direction are uniform. Since a coil member having a large number of turns and satisfactory current efficiency can be used, a shaft-like body can be heated uniformly and efficiently with a small amount of current.

Patent Document 4 discloses an induction heater and an induction heating method capable of heating by induction a work in which a gear portion and a shaft are integrated. An induction heater for a gear portion and a stepped shaft is arranged in such a manner that a first heating coil (annular coil) surrounds the gear portion and that a second heating coil (linear coil) faces the stepped shaft in an axial direction. Alternating currents of different frequencies are supplied to the first heating coil 1 and the second heating coil. Further, a part of the second heating coil is arranged so as to come opposite a boundary between the gear portion and the stepped shaft, thereby connecting a hardened pattern of the gear portion by the first heating coil and a hardened pattern of the stepped shaft by the second heating coil.

Patent Document 5 discloses that an induction wire ring is composed of a first induction wire ring and a second induction wire ring which can be housed in a first induction wire ring so that an inner periphery of the first induction wire ring has a predetermined gap from an outer periphery thereof, and the second induction wire ring has an inner diameter suitable for induction heating of the outer periphery of the stepped shaft. An induction heating device for a stepped shaft has an inner diameter suitable for induction-heating an outer periphery of a small-diameter part of a stepped shaft, and a first guide wire ring is mounted so as to be displaceable separately from a second guide wire ring or a state in which a second guide wire ring is housed in a first guide wire ring.

### [Patent Document]

[Patent Document 1]
   Japanese Examined Patent Application, Second Publication No. S52-021215
[Patent Document 2]
   Japanese Unexamined Patent Application, First Publication No. 2015-108188
[Patent Document 3]
   Japanese Unexamined Patent Application, First Publication No. 2000-87134
[Patent Document 4]
   US 2010/163551 A1
[Patent Document 5]
   JP S48 37742 A4

### [Problems to be Solved by the Invention]

However, in the traverse hardening device disclosed in Patent Documents 1 to 3, there is a problem in that traverse hardening cannot be efficiently performed on the shaft-like body in which a main body part, a first small-diameter part having an outer diameter smaller than that of the main body part, and a second small-diameter part having an outer diameter smaller than that of the first small-diameter part are continuous in that order from a central portion toward an end portion in an axial direction of the shaft-like body.

The reason for this is that, when an inner diameter of a secondary coil member is aligned with an outer diameter of the second small-diameter part, the first small-diameter part cannot be inserted into the secondary coil member, when an inner diameter of the secondary coil member is aligned with an outer diameter of the first small-diameter part, an air gap between the secondary coil member and the second small-diameter part becomes large when the second small-diameter part is inserted into the secondary coil member, and thus efficient traverse hardening cannot be performed.

The present invention has been made in view of such problems, and an objective thereof is to provide a traverse hardening device and a traverse hardening method in which traverse hardening not only on a main body part but also on a first small-diameter part provided at an end portion of the main body part and a second small-diameter part provided at an end portion of the first small-diameter part can be efficiently performed.

### [Means for Solving the Problem]

In order to solve the above-described problems, the present invention proposes the following aspects.

A traverse hardening device according to one aspect of the present invention is for performing traverse hardening on a shaft-like body, the shaft-like body including a main body part, a first small-diameter part provided at an end portion of the main body part on one side in an axial direction and having an outer diameter smaller than that of the main body part, and a second small-diameter part provided at an end portion of the first small-diameter part on one side in the axial direction and having an outer diameter smaller than that of the first small-diameter part, and the traverse hardening device includes a primary coil member which is formed in an annular shape, through which a high-frequency current is caused to flow, and which is externally disposed around the main body part; a secondary coil member formed in an annular shape, externally disposed around the first small-diameter part of the shaft-like body, and being able to be disposed in the primary coil member; and a tertiary coil member formed in an annular shape, externally disposed around the second small-diameter part of the shaft-like body, and being able to be disposed in the secondary coil member.

According to this aspect, when the main body part is subjected to traverse hardening, the primary coil member is externally disposed around the main body part, and a high-frequency current is caused to flow in the primary coil member that moves in the axial direction. The main body part is heated by electromagnetic induction between the primary coil member and the main body part, and then the main body part is cooled by a cooling unit that moves in the axial direction following the primary coil member, and thereby traverse hardening of the main body part is performed.

When the first small-diameter part is subjected to traverse hardening, the secondary coil member and the primary coil member are externally disposed around the first small-diameter part, and a high-frequency current is caused to flow in the primary coil member that moves in the axial direction. An eddy current that is electromagnetically induced by the primary coil member and the secondary coil member flows in the secondary coil member. Then, an eddy current that is electromagnetically induced by the secondary coil member and the first small-diameter part flows in the first small-diameter part, and the first small-diameter part is subjected to traverse hardening by heating. In this way, when the secondary coil member is disposed between the primary coil member and the first small-diameter part, an air gap between an outer circumference of the first small-diameter part and an inner circumference of the primary coil member decreases to an air gap between the outer circumference of the first small-diameter part and an inner circumference of the secondary coil member, and traverse hardening is efficiently performed.

When the second small-diameter part is subjected to traverse hardening, the tertiary coil member, the secondary coil member, and the primary coil member are externally disposed around the second small-diameter part, and a high-frequency current is caused to flow in the primary coil member that moves in the axial direction. An eddy current that is electromagnetically induced by the primary coil member and the secondary coil member flows in the secondary coil member. Then, an eddy current that is electromagnetically induced by the secondary coil member and the tertiary coil member flows in the tertiary coil member. Then, an eddy current that is electromagnetically induced by the tertiary coil member and the second small-diameter part flows in the second small-diameter part, and thereby the second small-diameter part is subjected to traverse hardening by heating. In this way, when the secondary coil member and the tertiary coil member are disposed between the primary coil member and the second small-diameter part, an air gap between an outer circumference of the second small-diameter part and the inner circumference of the primary coil member decreases to an air gap between the outer circumference of the second small-diameter part and an inner circumference of the tertiary coil member, and traverse hardening is efficiently performed.

As described above, traverse hardening can be efficiently performed not only on the main body part but also on the first small-diameter part and the second small-diameter part.

Further, "annular shape" as used in the specification of the present application means "circular shape as a whole," and those having a missing part in a part in the circumferential direction such as coils of various types used in the invention of the present application are also referred to as having an "annular shape."

The following configuration may be employed in the traverse hardening device described above: a second missing part is formed at a part in a circumferential direction of the secondary coil member; a third missing part is formed at a part in the circumferential direction of the tertiary coil member; and a circumferential position of the second missing part and a circumferential position of the third missing part overlap each other at least in a part.

In this case, a range in which the secondary coil member and the tertiary coil member overlap each other in the circumferential direction can be extended. As a result, a range that does not contribute to electromagnetic induction can be reduced.

A traverse hardening method according to one aspect of the present invention is a method of performing traverse hardening on a shaft-like body, the shaft-like body including a main body part, a first small-diameter part provided at an end portion of the main body part on one side in an axial direction and having an outer diameter smaller than that of the main body part, and a second small-diameter part provided at an end portion of the first small-diameter part on one side in the axial direction and having an outer diameter smaller than that of the first small-diameter part, and the traverse hardening method includes: heating the second small-diameter part using induction heating by causing a tertiary coil member formed in an annular shape to be externally disposed around an end portion of the second small-diameter part on one side in the axial direction, causing at least a part of a secondary coil member formed in an annular shape to be externally disposed around the tertiary coil member, causing at least a part of a primary coil member which is formed in an annular shape and through which a high-frequency current is caused to flow to be externally disposed around the secondary coil member, and moving the tertiary coil member, the secondary coil member, and the primary coil member integrally to the other side in the axial direction; heating the first small-diameter part using induction heating by moving the secondary coil member and the primary coil member integrally to the other side in the axial direction in a state in which the tertiary coil member is externally disposed around an end portion of the second small-diameter part on the other side in the axial direction or the tertiary coil member is retreated to one side in the axial direction; and heating the main body part using induction heating by moving the primary coil member to the other side in the axial direction in a state in which the secondary coil member is externally disposed around an end portion of the first small-diameter part on the other side in the axial direction or the secondary coil member is retreated to one side in the axial direction.

According to this aspect, when the shaft-like body is subjected to traverse hardening by moving the primary coil member to the other side in the axial direction relative to the shaft-like body, as a more specific description, traverse hardening will be performed as follows.

First, the tertiary coil member, the secondary coil member, and the primary coil member are externally disposed around an end portion of the second small-diameter part on one side in the axial direction, and the tertiary coil member, the secondary coil member, and the primary coil member are integrally moved toward the other side in the axial direction. An eddy current that is electromagnetically induced by the primary coil member through which a high-frequency current flows and the secondary coil member flows in the secondary coil member. Then, an eddy current that is electromagnetically induced by the secondary coil member and the tertiary coil member flows in the tertiary coil member. Then, an eddy current that is electromagnetically induced by the tertiary coil member and the second small-diameter part flows in the second small-diameter part, and thereby the second small-diameter part is heated. In this way, when the secondary coil member and the tertiary coil member are disposed between the primary coil member and the second small-diameter part, an air gap between the outer circumference of the second small-diameter part and the inner circumference of the primary coil member decreases to an air gap between the outer circumference of the second small-diameter part and the inner circumference of the tertiary coil member, and heating of the second small-diameter part is efficiently performed. Thereafter, the second small-diameter part is cooled by, for example, a cooling unit that moves toward the other side in the axial direction following the primary coil member, and thereby traverse hardening of the second small-diameter part is performed.

Next, the secondary coil member and the primary coil member are integrally and externally disposed around the first small-diameter part and moved toward the other side in the axial direction while the tertiary coil member is left at an end portion of the second small-diameter part on the other side in the axial direction. Here, after the tertiary coil member has heated the end portion of the second small-diameter part on the other side in the axial direction, it is preferable that the tertiary coil member be immediately retreated to one side in the axial direction before cooling of the end portion is started. This is because cooling efficiency of the end portion of the second small-diameter part increases by retreating the tertiary coil member, whose temperature has risen during the heating of the second small-diameter part, from the second small-diameter part.

An eddy current that is electromagnetically induced by the primary coil member through which a high-frequency current flows and the secondary coil member flows in the secondary coil member. Then, an eddy current that is electromagnetically induced by the secondary coil member and the first small-diameter part flows in the first small-diameter part, and thereby the first small-diameter part is heated. In this way, when the secondary coil member is disposed between the primary coil member and the first small-diameter part, an air gap between the outer circumference of the first small-diameter part and the inner circumference of the primary coil member decreases to an air gap between the outer circumference of the first small-diameter part and the inner circumference of the secondary coil member, and traverse hardening of the first small-diameter part is efficiently performed.

Next, the primary coil member is externally disposed around the main body part and moved toward the other side in the axial direction while the secondary coil member is left at an end portion of the first small-diameter part on the other side in the axial direction. Here, after the secondary coil member has heated the end portion of the first small-diameter part on the other side in the axial direction, it is preferable that the secondary coil member be immediately retreated to one side in the axial direction before cooling of the end portion is started. This is because cooling efficiency of the end portion of the first small-diameter part increases by retreating the secondary coil member, whose temperature has risen during the heating of the first small-diameter part, from the first small-diameter part.

Electromagnetic induction between the primary coil member through which a high-frequency current flows and the main body part causes the main body part to be heated.

Further, as in the second small-diameter part, the first small-diameter part and the main body part are heated and then cooled by the cooling unit.

As described above, when the shaft-like body is subjected to traverse hardening by moving the primary coil member to the other side in the axial direction relative to the shaft-like body, traverse hardening can be efficiently performed not only on the main body part but also on the first small-diameter part and the second small-diameter part.

A traverse hardening method according to another aspect of the present invention is a method of performing traverse hardening on a shaft-like body, the shaft-like body including a main body part, a first small-diameter part provided at an end portion of the main body part on one side in an axial direction and having an outer diameter smaller than that of the main body part, and a second small-diameter part provided at an end portion of the first small-diameter part on one side in the axial direction and having an outer diameter smaller than that of the first small-diameter part, and the traverse hardening method includes: heating the main body part using induction heating by moving a primary coil member to one side in the axial direction while a secondary coil member formed in an annular shape is externally disposed around an end portion of the first small-diameter part on the other side in the axial direction, a tertiary coil member formed in an annular shape is externally disposed around an end portion of the secondary small-diameter part on the other side in the axial direction, and the primary coil member which is formed in an annular shape and through which a high-frequency current is caused to flow is externally disposed around the main body part; heating the first small-diameter part using induction heating by moving the primary coil member and the secondary coil member integrally to one side in the axial direction when at least a part of the secondary coil member is disposed in the primary coil member; and heating the second small-diameter part using induction heating by moving the primary coil member, the secondary coil member, and the tertiary coil member integrally to one side in the axial direction when at least a part of the tertiary coil member is disposed in the secondary coil member.

According to this aspect, when the shaft-like body is subjected to traverse hardening by moving the primary coil member to the one side in the axial direction relative to the shaft-like body, as a more specific description, traverse hardening will be performed as follows.

First, the primary coil member is externally disposed around the main body part and moved toward one side in the axial direction. Electromagnetic induction between the primary coil member through which a high-frequency current flows and the main body part causes the main body part to be heated. Thereafter, the main body part is cooled by, for example, a cooling unit that moves toward one side in the axial direction following the primary coil member, and thereby traverse hardening of the main body part is performed.

Next, when the primary coil member is externally disposed around at least a part of the secondary coil member externally disposed around the end portion of the first small-diameter part on the other side in the axial direction, the primary coil member and the secondary coil member are integrally moved toward one side in the axial direction. An eddy current that is electromagnetically induced by the primary coil member through which a high-frequency current flows and the secondary coil member flows in the secondary coil member. Then, an eddy current that is electromagnetically induced by the secondary coil member and the first small-diameter part flows in the first small-diameter part, and thereby the first small-diameter part is heated. In this way, when the secondary coil member is disposed between the primary coil member and the first small-diameter part, an air gap between the outer circumference of the first small-diameter part and the inner circumference of the primary coil member decreases to an air gap between the outer circumference of the first small-diameter part and the inner circumference of the secondary coil member, and traverse hardening of the first small-diameter part is efficiently performed.

Next, when at least a part of the primary coil member and the secondary coil member that move integrally is externally disposed around the tertiary coil member that is externally disposed around an end portion of the second small-diameter part on the other side in the axial direction, the primary coil member, the secondary coil member, and the tertiary coil member are integrally moved toward one side in the axial direction. An eddy current that is electromagnetically induced by the primary coil member through which a high-frequency current flows and the secondary coil member flows in the secondary coil member. Then, an eddy current that is electromagnetically induced by the secondary coil member and the tertiary coil member flows in the tertiary coil member. Then, an eddy current that is electromagnetically induced by the tertiary coil member and the second small-diameter part flows in the second small-diameter part, and thereby the second small-diameter part is heated. In this way, when the secondary coil member and the tertiary coil member are disposed between the primary coil member and the second small-diameter part, an air gap between the outer circumference of the second small-diameter part and the inner circumference of the primary coil member decreases to an air gap between the outer circumference of the second small-diameter part and the inner circumference of the tertiary coil member, and traverse hardening of the second small-diameter part is efficiently performed.

Further, as in the main body part, the first small-diameter part and the second small-diameter part are heated and then cooled by the cooling unit.

As described above, when the shaft-like body is subjected to traverse hardening by moving the primary coil member toward one side in the axial direction relative to the shaft-like body, traverse hardening can be efficiently performed not only on the main body part but also on the first small-diameter part and the second small-diameter part.

### [Effects of the Invention]

According to the traverse hardening device and the traverse hardening method of the above-described aspects, traverse hardening not only on the main body part but also on the first small-diameter part provided at an end portion of the main body part and the second small-diameter part provided at an end portion of the first small-diameter part can be efficiently performed.

### [Brief Description of the Drawings]

FIG. 1 is a schematic side view in which a part of a traverse hardening device according to one embodiment of the present invention is cut away.
FIG. 2 is a plan sectional view along line II-II in FIG. 1.
FIG. 3 is a flowchart showing a traverse hardening method in the embodiment.
FIG. 4 is a view for explaining a first small-diameter part first hardening step in the traverse hardening method of the embodiment and is a longitudinal sectional view of a main part.
FIG. 5 is a view for explaining a main body part hardening step in the traverse hardening method of the embodiment and is a longitudinal sectional view of a main part.
FIG. 6 is a view for explaining a first small-diameter part second hardening step in the traverse hardening method of the embodiment and is a longitudinal sectional view of a main part.
FIG. 7 is a view for explaining a second small-diameter part second hardening step in the traverse hardening method of the embodiment and is a longitudinal sectional view of a main part.
FIG. 8 is a side view of an analytical model used in a simulation of the traverse hardening device of the embodiment.
FIG. 9 is a view showing a simulation result using a traverse hardening device of an example.
FIG. 10 is a view showing a simulation result using a traverse hardening device of a comparative example.

### [Embodiments of the Invention]

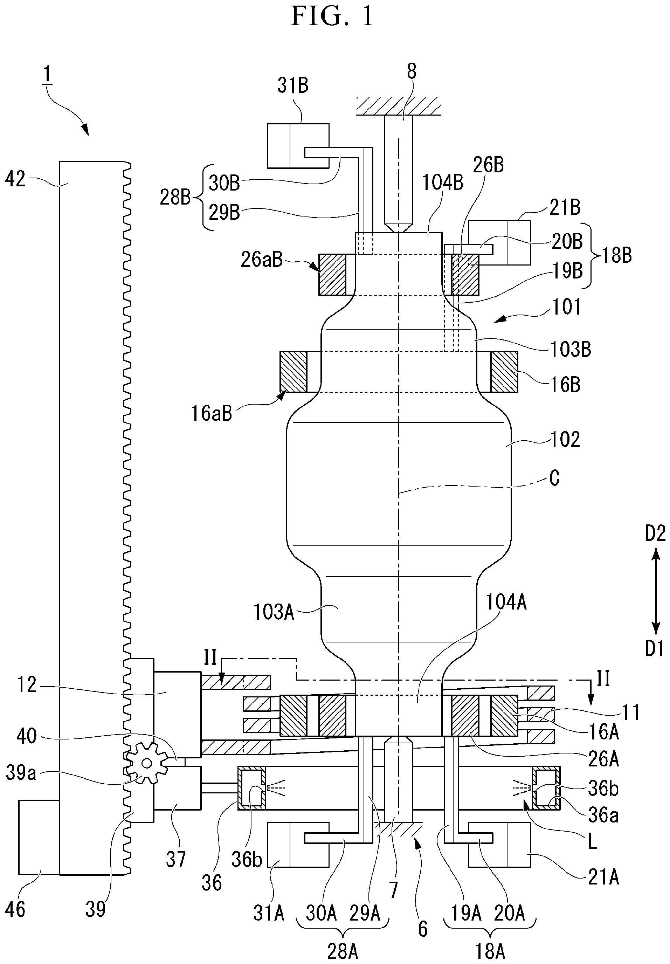

Hereinafter, one embodiment of a traverse hardening device according to the present invention will be described with reference to FIGS. 1 to 10.

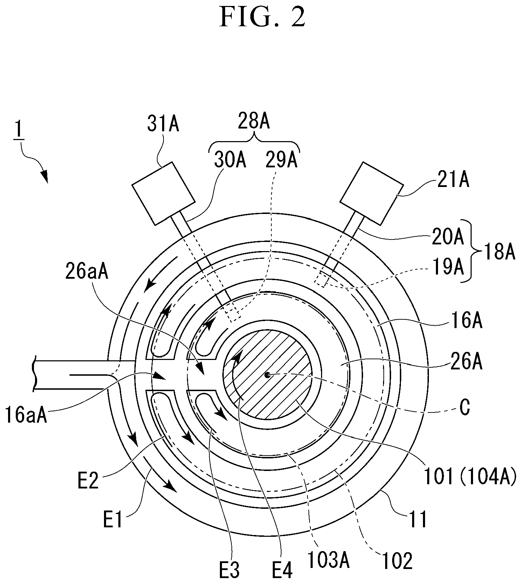

As illustrated in FIGS. 1 and 2, a traverse hardening device 1 of the present embodiment is a device for performing traverse hardening (traverse hardening) on a shaft-like body 101 such as an axle of a railway vehicle using a high-frequency current.

First, the shaft-like body 101 will be described. The shaft-like body 101 includes a main body part 102, a first small-diameter part 103A and a second small-diameter part 104A provided at an end portion of the main body part 102 on one side (the other side) D1 in an axis C direction, and a first small-diameter part 103B and a second small-diameter part 104B provided at an end portion of the main body part 102 on the other side (one side) D2 in the axis C direction.

The main body part 102, the first small-diameter parts 103A and 103B, and the second small-diameter parts 104A and 104B are each formed in a columnar shape and disposed coaxially with the axis C of the main body part 102. Outer diameters of the first small-diameter parts 103A and 103B are equal to each other and smaller than an outer diameter of the main body part 102. Outer diameters of the second small-diameter parts 104A and 104B are equal to each other and smaller than the outer diameters of the first small-diameter parts 103A and 103B.

The second small-diameter part 104A is provided at a lower end portion of the first small-diameter part 103A, and a lower end surface thereof reaches a lower end of the shaft-like body 101. The second small-diameter part 104B is provided at an upper end portion of the first small-diameter part 103B, and an upper end surface thereof reaches an upper end of the shaft-like body 101.

The shaft-like body 101 is formed of a material having conductivity such as carbon steel or a low-alloy steel containing 95% by weight or more of iron (Fe), which is ferrite.

The traverse hardening device 1 includes a support member 6, a primary coil member 11, secondary coil members 16A and 16B, tertiary coil members 26A and 26B, a cooling ring (cooling unit) 36, and a control unit 46.

In the present embodiment, a configuration of the secondary coil member 16A and a configuration of the secondary coil member 16B are plane-symmetric with respect to a reference plane perpendicular to a vertical direction. Therefore, components of the secondary coil member 16A are denoted by adding a capital letter "A" to a numeral, or a numeral and a lowercase letter. Components of the secondary coil member 16B corresponding to the secondary coil member 16A are denoted by adding a capital letter "B" to the same numeral, or the same numeral and lowercase letter as in the secondary coil member 16A. Thereby, duplicated description will be omitted. The same applies to the tertiary coil members 26A and 26B, and second support parts 18A and 18B to be described below. For example, a second support piece 19A of the second support part 18A and a second support piece 19B of the second support part 18B have a plane symmetrical configuration with respect to the reference plane.

As illustrated in FIG. 1, the support member 6 includes a lower center 7 and an upper center 8. The lower center 7 supports the second small-diameter part 104A of the shaft-like body 101 from below the second small-diameter part 104A. The upper center 8 supports the second small-diameter part 104B of the shaft-like body 101 from above the second small-diameter part 104B. The lower center 7 and the upper center 8 support the shaft-like body 101 such that the axis C extends in the vertical direction in which one side D1 is downward and the other side D2 is upward in the axis C direction.

The primary coil member 11 is formed in an annular shape in which an element wire of the coil is spirally wound. An inner diameter of the primary coil member 11 is larger than the outer diameter of the main body part 102. The primary coil member 11 is externally disposed around the main body part 102. "Externally disposed around A (for example, the main body part 102 or the like)" as used herein means to move in the axis C direction with respect to A and to be disposed to surround an outer side of A.

Each end portion of the primary coil member 11 is electrically and mechanically connected to a current transformer 12. The current transformer 12 supplies a high-frequency current to the primary coil member 11.

As illustrated in FIGS. 1 and 2, the secondary coil member 16A is formed in an annular shape. A second missing part 16aA in which the secondary coil member 16A is not disposed in a part in a circumferential direction of the secondary coil member 16A (hereinafter, simply referred to as "circumferential direction") is formed in the secondary coil member 16A to generate an eddy current. The circumferential direction coincides with circumferential directions of the primary coil member 11, the secondary coil member 16B, and the tertiary coil members 26A and 26B. An inner diameter of the secondary coil member 16A is larger than an outer diameter of the first small-diameter part 103A of the shaft-like body 101. An outer diameter of the secondary coil member 16A is smaller than the inner diameter of the primary coil member 11. The secondary coil member 16A is externally disposed around the first small-diameter part 103A of the shaft-like body 101 and can be disposed in the primary coil member 11 while it is spaced apart from the first small-diameter part 103A and the primary coil member 11.

The second support part 18A is fixed to the secondary coil member 16A. The second support part 18A includes the second support piece 19A that extends downward from the secondary coil member 16A, and a second connection piece 20A that extends radially outward from the second support piece 19A. The second connection piece 20A extends radially outward from an end portion of the second support piece 19A on a side opposite to an end portion to which the secondary coil member 16A is fixed. The second support part 18A is formed, for example, by bending a rod-shaped member having electrical insulation properties into an L shape.

A second moving unit 21A is connected to the second connection piece 20A. The second moving unit 21A includes, for example, a triaxial stage and a drive motor (which are not illustrated) and can move the secondary coil member 16A via the second support part 18A in the vertical direction and a direction along a horizontal plane.

The secondary coil member 16B is configured similarly to the secondary coil member 16A.

As in the secondary coil member 16A, the second support part 18B and a second moving unit 21B are connected to the secondary coil member 16B.

The tertiary coil member 26A is formed in an annular shape. As in the secondary coil member 16A, a third missing part 26aA in which the tertiary coil member 26A is not disposed in a part in the circumferential direction is formed in the tertiary coil member 26A. The third missing part 26aA and the second missing part 16aA of the secondary coil member 16A described above are formed at the same position in the circumferential direction. That is, the third missing part 26aA of the tertiary coil member 26A and the second missing part 16aA of the secondary coil member 16A are formed at positions at which at least parts thereof overlap each other in the circumferential direction, and more preferably at positions at which they are completely coincident with each other in the circumferential direction.

An inner diameter of the tertiary coil member 26A is larger than an outer diameter of the second small-diameter part 104A of the shaft-like body 101. An outer diameter of the tertiary coil member 26A is smaller than the inner diameter of the secondary coil member 16A. The tertiary coil member 26A is externally disposed around the second small-diameter part 104A of the shaft-like body 101 and can be disposed in the secondary coil member 16A while it is spaced apart from the second small-diameter part 104A and the secondary coil member 16A.

As in the secondary coil member 16A, a third support part 28A and a third moving unit 31A are connected to the tertiary coil member 26A. The third support part 28A includes a third support piece 29A and a third connection piece 30A that are configured similarly to the second support piece 19A and the second connection piece 20A.

The tertiary coil member 26B is configured similarly to the tertiary coil member 26A. As in the tertiary coil member 26A, a third support part 28B and a third moving unit 31B are connected to the tertiary coil member 26B. The primary coil member 11, the secondary coil members 16A and 16B, and the tertiary coil members 26A and 26B are formed of a material having conductivity such as copper.

As illustrated in FIG. 1, the cooling ring 36 is formed in an annular shape. An internal space 36a is formed in the cooling ring 36. A plurality of nozzles 36b communicating with the internal space 36a are formed on an inner circumferential surface of the cooling ring 36 to be spaced apart from each other in the circumferential direction. The shaft-like body 101 is inserted into the cooling ring 36. The cooling ring 36 is disposed below the primary coil member 11.

A pump 37 is connected to the cooling ring 36. The pump 37 supplies a cooling liquid L such as water into the internal space 36a of the cooling ring 36. The cooling liquid L supplied into the internal space 36a is ejected toward the shaft-like body 101 through the plurality of nozzles 36b to cool the shaft-like body 101.

The primary coil member 11, the current transformer 12, the cooling ring 36, and the pump 37 are fixed to a support plate 39. A pinion gear 39a is fixed to the support plate 39 to be rotatable. A motor 40 which rotationally drives the pinion gear 39a is attached to the support plate 39.

The support plate 39 is connected to a rack 42 via a guide rail (not illustrated). The support plate 39 is vertically movable relative to the rack 42 due to the guide rail. The pinion gear 39a meshes with teeth of the rack 42. Therefore, when the control unit 46 drives the motor 40, the pinion gear 39a rotates, and the support plate 39 moves upward or downward relative to the rack 42.

Although not illustrated, the control unit 46 includes an arithmetic circuit and a memory. A control program or the like for driving the arithmetic circuit is stored in the memory.

The control unit 46 is connected to the current transformer 12, the second moving units 21A and 21B, the third moving units 31A and 31B, the pump 37, and the motor 40 to control them.

Next, a traverse hardening method of the present embodiment will be described.

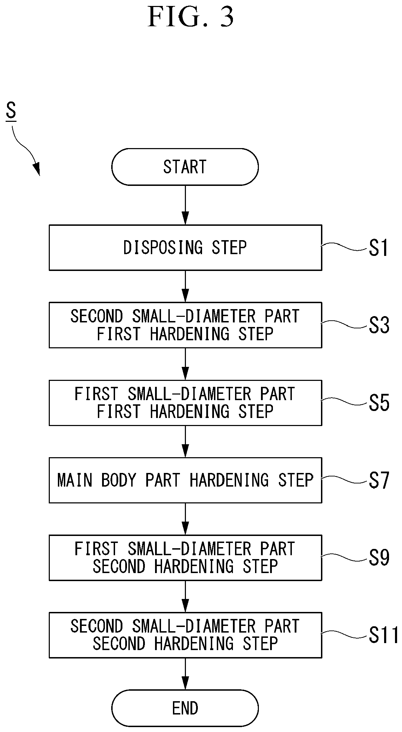

FIG. 3 is a flowchart showing a traverse hardening method S of the present embodiment.

Preliminarily, the shaft-like body 101 is supported by the support member 6 such that the axis C extends in the vertical direction. The primary coil member 11, the secondary coil members 16A and 16B, and the tertiary coil members 26A and 26B are removed from the shaft-like body 101.

First, in a disposing step (step S1 shown in FIG. 3), as illustrated in FIG. 1, the control unit 46 drives the motor 40, the second moving unit 21A, and the third moving unit 31A so that at least a part of the secondary coil member 16A is externally disposed around the tertiary coil member 26A and at least a part of the primary coil member 11 is externally disposed around the secondary coil member 16A. At this time, central axes of the primary coil member 11, the secondary coil member 16A, and the tertiary coil member 26A are disposed to coincide with a central axis (axis C) of the shaft-like body 101. An outer circumferential surface of the tertiary coil member 26A is caused to be spaced apart from an inner circumferential surface of the secondary coil member 16A, and an outer circumferential surface of the secondary coil member 16A is caused to be spaced apart from an inner circumferential surface of the primary coil member 11.

The second moving unit 21B and the third moving unit 31B are driven so that the secondary coil member 16B is externally disposed around a lower end portion of the first small-diameter part 103B in the axis C direction and the tertiary coil member 26B is externally disposed around a lower end portion of the second small-diameter part 104B in the axis C direction. At this time, central axes of the secondary coil member 16B and the tertiary coil member 26B are each disposed to coincide with the central axis of the shaft-like body 101. An inner circumferential surface of the secondary coil member 16B is caused to be spaced apart from an outer circumferential surface of the first small-diameter part 103B, and an inner circumferential surface of the tertiary coil member 26B is caused to be spaced apart from an outer circumferential surface of the second small-diameter part 104B.

The current transformer 12 is driven to cause a high-frequency current to flow in the primary coil member 11. The pump 37 is driven so that the cooling liquid L is ejected from the plurality of nozzles 36b of the cooling ring 36.

When the disposing step S1 ends, the processing proceeds to step S3.

Next, in a second small-diameter part first hardening step (step S3), the control unit 46 drives the motor 40, the second moving unit 21A, and the third moving unit 31A to move the tertiary coil member 26A, the secondary coil member 26A, and the primary coil member 11 integrally upward. As illustrated in FIG. 1, the tertiary coil member 26A, the secondary coil member 16A, and the primary coil member 11 moving integrally are externally disposed around a lower end portion of the second small-diameter part 104A, and the second small-diameter part 104A is heated from the lower end portion to an upper end portion thereof by induction heating. At this time, an inner circumferential surface of the tertiary coil member 26A is caused to be spaced apart from an outer circumferential surface of the second small-diameter part 104A.

As illustrated in FIG. 2, when a current flows through the primary coil member 11 in a direction E1, an eddy current in a direction E2 flows on an outer surface of the secondary coil member 16A due to electromagnetic induction. When the eddy current in the direction E2 flows on the outer surface of the secondary coil member 16A, an eddy current in a direction E3 flows on an outer surface of the tertiary coil member 26A. Further, when the eddy current in the direction E3 flows on the outer surface of the tertiary coil member 26A, an eddy current in a direction E4 flows on an outer surface of the second small-diameter part 104A. In this way, the second small-diameter part 104A is heated by the eddy current flowing in the direction E4 on the outer surface of the second small-diameter part 104A.

When the primary coil member 11 through which a high-frequency current flows and the second small-diameter part 104A are electromagnetically induced via the secondary coil member 16A and the tertiary coil member 26A, an air gap between the inner circumferential surface of the primary coil member 11 and the outer circumferential surface of the second small-diameter part 104A decreases to an air gap between the outer circumferential surface of the second small-diameter part 104A and the inner circumferential surface of the tertiary coil member 26A. The second small-diameter part 104A is cooled by the cooling ring 36 that moves upward following the primary coil member 11, and thereby traverse hardening of the second small-diameter part 104A is performed.

Further, in the second small-diameter part first hardening step S3, and a first small-diameter part first hardening step S5, a main body part hardening step S7, a first small-diameter part second hardening step S9, and a second small-diameter part second hardening step S11 which are to be described below, traverse hardening is performed while upward movement of the primary coil member 11 and the cooling ring 36 with respect to the shaft-like body 101 is continued without being stopped.

When the second small-diameter part first hardening step S3 ends, the processing proceeds to step S5.

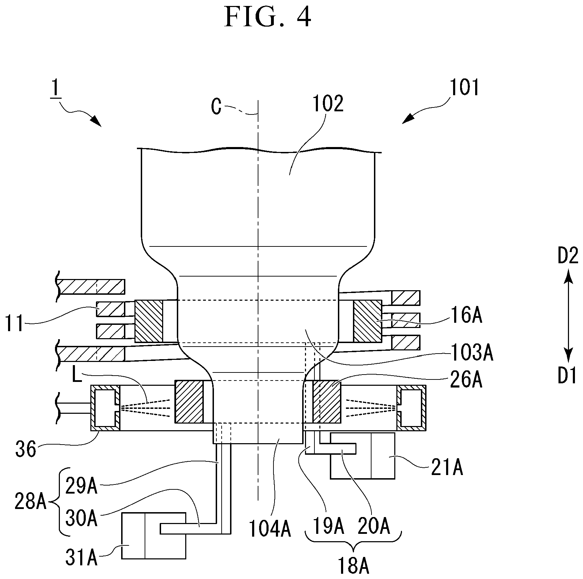

Next, in the first small-diameter part first hardening step (step S5), the control unit 46 stops driving of the third moving unit 31A to stop the tertiary coil member 26A in a state in which the tertiary coil member 26A is externally disposed around the upper end portion or the lower end portion of the second small-diameter part 104A as illustrated in FIG. 4. Then, the motor 40 and the second moving unit 21A are driven to move the secondary coil member 16A and the primary coil member 11 integrally upward so that the first small-diameter part 103A is heated by induction heating. At this time, the inner circumferential surface of the secondary coil member 16A is caused to be spaced apart from an outer circumferential surface of the first small-diameter part 103A.

Further, instead of stopping the tertiary coil member 26A in a state in which it is externally disposed around the upper end portion of the second small-diameter part 104A, the tertiary coil member 26A is preferably retreated downward after heating the second small-diameter part 104A and before cooling the second small-diameter part 104A. This is because cooling efficiency of the end portion of the second small-diameter part 104A increases due to two points of (1) preventing further heating by retreating the tertiary coil member 26A, whose temperature has risen during the heating of the second small-diameter part 104A, from the second small-diameter part 104A, and (2) allowing the cooling liquid L ejected from the cooling ring 36 to easily hit the upper end portion of the second small-diameter part 104A.

When the first small-diameter part first hardening step S5 ends, the processing proceeds to step S7.

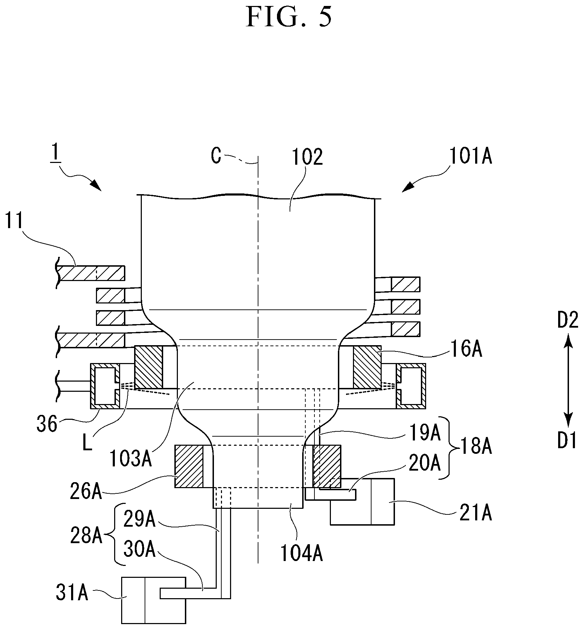

Next, in the main body part hardening step (step S7), the control unit 46 stops driving of the second moving unit 21 A to stop the secondary coil member 16A in a state in which the secondary coil member 16A is externally disposed around the upper end portion or the lower end portion of the first small-diameter part 103 A as illustrated in FIG. 5. Then, the motor 40 is driven to move the primary coil member 11 upward while externally fitting it to the main body part 102 and heat the main body part 102 using induction heating. At this time, the inner circumferential surface of the primary coil member 11 is caused to be spaced apart from an outer circumferential surface of the main body part 102.

Further, instead of stopping the secondary coil member 16A in a state in which it is externally disposed around the upper end portion of the first small-diameter part 103A, the secondary coil member 16A is preferably retreated downward after heating the main body part 102 and before cooling the main body part 102. This is because cooling efficiency of the end portion of the first small-diameter part 103A increases due to two points of (1) preventing further heating by retreating the secondary coil member 16A, whose temperature has risen during the heating of the main body part 102, from the main body part 102, and (2) allowing the cooling liquid L ejected from the cooling ring 36 to easily hit the upper end portion of the first small-diameter part 103A.

When the main body part hardening step S7 ends, the processing proceeds to step S9.

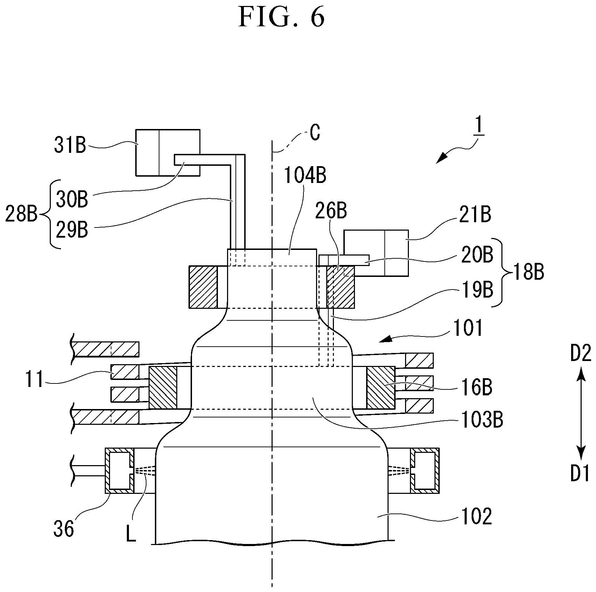

Next, in the first small-diameter part second hardening step (step S9), the control unit 46 drives the motor 40 and the second moving unit 21B to move the primary coil member 11 and the secondary coil member 16B integrally upward when at least a part of the secondary coil member 16B is disposed in the primary coil member 11 as illustrated in FIG. 6 and heat the first small-diameter part 103B using induction heating. At this time, the inner circumferential surface of the primary coil member 11 is caused to be spaced apart from an outer circumferential surface of the secondary coil member 16B.

When the first small-diameter part second hardening step S9 ends, the processing proceeds to step S11.

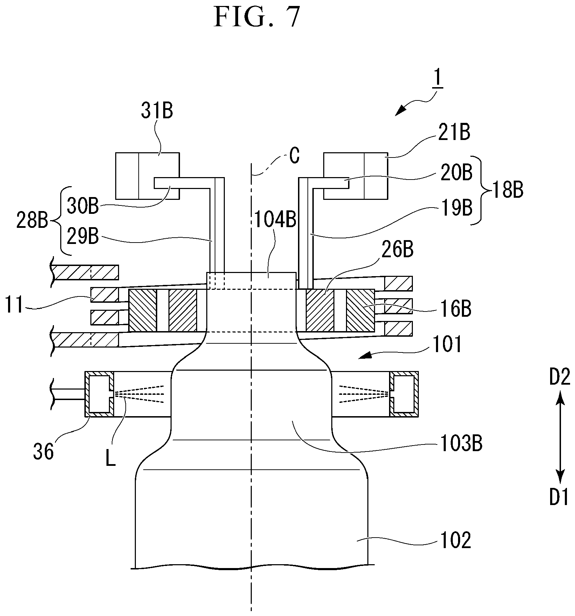

Next, in the second small-diameter part second hardening step (step S11), the control unit 46 drives the motor 40, the second moving unit 21B, and the third moving unit 31B to move the primary coil member 11, the secondary coil member 16B, and the tertiary coil member 26B integrally upward when at least a part of the tertiary coil member 26B is disposed in the secondary coil member 16B as illustrated in FIG. 7, and heat the second small-diameter part 104B using induction heating. At this time, the inner circumferential surface of the secondary coil member 16B is caused to be spaced apart from an outer circumferential surface of the tertiary coil member 26B.

Further, in the first small-diameter part first hardening step S5, the main body part hardening step S7, the first small-diameter part second hardening step S9, and the second small-diameter part second hardening step S11, the first small-diameter part 103A, the main body part 102, the first small-diameter part 103B, and the second small-diameter part 104B are heated and then are cooled by the cooling ring 36.

When the second small-diameter part second hardening step S11 ends, all the steps of traverse hardening method S end, and traverse hardening of the entire shaft-like body 101 is performed. The shaft-like body 101 that has been subjected to traverse hardening is improved in hardness

As described above, according to the traverse hardening device 1 of the present embodiment, when the main body part 102 is subjected to traverse hardening, the primary coil member 11 is externally disposed around the main body part 102, and a high-frequency current is caused to flow in the primary coil member 11 that moves upward. The main body part 102 is heated by electromagnetic induction between the primary coil member 11 and the main body part 102, and then the main body part 102 is cooled by the cooling ring 36 that moves upward following the primary coil member 11, and thereby traverse hardening of the main body part 102 is performed.

When the first small-diameter part 103A is subjected to traverse hardening, the secondary coil member 16A and the primary coil member 11 are externally disposed around the first small-diameter part 103A, and a high-frequency current is caused to flow in the primary coil member 11 that moves upward. An eddy current that is electromagnetically induced by the primary coil member 11 and the secondary coil member 16A flows in the secondary coil member 16A. Then, an eddy current that is electromagnetically induced by the secondary coil member 16A and the first small-diameter part 103A flows in the first small-diameter part 103A, and the first small-diameter part 103A is subjected to traverse hardening by heating. In this way, when the secondary coil member 16A is disposed between the primary coil member 11 and the first small-diameter part 103A, an air gap between the outer circumferential surface of the first small-diameter part 103A and the inner circumferential surface of the primary coil member 11 decreases to an air gap between the outer circumferential surface of the first small-diameter part 103A and the inner circumferential surface of the secondary coil member 16A, and traverse hardening is efficiently performed.

When the second small-diameter part 104A is subjected to traverse hardening, the tertiary coil member 26A, the secondary coil member 16A, and the primary coil member 11 are externally disposed around the second small-diameter part 104A, and a high-frequency current is caused to flow in the primary coil member 11 that moves upward. An eddy current that is electromagnetically induced by the primary coil member 11 and the secondary coil member 16A flows in the secondary coil member 16A. Then, an eddy current that is electromagnetically induced by the secondary coil member 16A and the tertiary coil member 26A flows in the tertiary coil member 26A. Then, an eddy current that is electromagnetically induced by the tertiary coil member 26A and the second small-diameter part 104A flows in the second small-diameter part 104A, and thereby the second small-diameter part 104A is subjected to traverse hardening by heating. In this way, when the secondary coil member 16A and the tertiary coil member 26A are disposed between the primary coil member 11 and the second small-diameter part 104A, an air gap between the outer circumferential surface of the second small-diameter part 104A and the inner circumferential surface of the primary coil member 11 decreases to an air gap between the outer circumferential surface of the second small-diameter part 104A and the inner circumferential surface of the tertiary coil member 26A, and traverse hardening is efficiently performed.

As described above, the traverse hardening can be efficiently performed not only on the main body part 102 but also on the first small-diameter part 103A and the second small-diameter part 104A.

When the shaft-like body 101 is subjected to traverse hardening by moving the primary coil member 11 upward relative to the shaft-like body 101 having the first small-diameter part 103A and the second small-diameter part 104A formed on a lower side thereof, traverse hardening of the shaft-like body 101 is performed as follows.

First, the tertiary coil member 26A, the secondary coil member 16A, and the primary coil member 11 are externally disposed around the lower end portion of the second small-diameter part 104A, and the tertiary coil member 26A, the secondary coil member 16A, and the primary coil member 11 are integrally moved upward. An eddy current that is electromagnetically induced by the primary coil member 11 through which a high-frequency current flows and the secondary coil member 16A flows in the secondary coil member 16A. Then, an eddy current that is electromagnetically induced by the secondary coil member 16A and the tertiary coil member 26A flows in the tertiary coil member 26A. Then, an eddy current that is electromagnetically induced by the tertiary coil member 26A and the second small-diameter part 104A flows in the second small-diameter part 104A, and thereby the second small-diameter part 104A is heated. In this way, when the secondary coil member 16A and the tertiary coil member 26A are disposed between the primary coil member 11 and the second small-diameter part 104A, an air gap between the inner circumferential surface of the primary coil member 11 and the outer circumferential surface of the second small-diameter part 104A decreases to an air gap between the outer circumferential surface of the second small-diameter part 104A and the inner circumferential surface of the tertiary coil member 26A, and heating of the second small-diameter part 104A is efficiently performed. Thereafter, the second small-diameter part 104A is cooled by the cooling ring 36 that moves upward following the primary coil member 11, and thereby traverse hardening of the second small-diameter part 104A is performed.

Next, the secondary coil member 16A and the primary coil member 11 are integrally and externally disposed around the first small-diameter part 103A and moved upward while the tertiary coil member 26A is left at the upper end portion or the lower end portion of the second small-diameter part 104A. An eddy current that is electromagnetically induced by the primary coil member 11 through which a high-frequency current flows and the secondary coil member 16A flows in the secondary coil member 16A. Then, an eddy current that is electromagnetically induced by the secondary coil member 16A and the first small-diameter part 103A flows in the first small-diameter part 103A, and thereby the first small-diameter part 103A is heated. In this way, when the secondary coil member 16A is disposed between the primary coil member 11 and the first small-diameter part 103A, an air gap between the inner circumferential surface of the primary coil member 11 and the outer circumferential surface of the first small-diameter part 103A decreases to an air gap between the outer circumferential surface of the first small-diameter part 103A and the inner circumferential surface of the secondary coil member 16A, and traverse hardening of the first small-diameter part 103A is efficiently performed.

Next, the primary coil member 11 is externally disposed around the main body part 102 and moved upward while the secondary coil member 16A is left at the upper end portion or the lower end portion of the first small-diameter part 103A. Electromagnetic induction between the primary coil member 11 through which a high-frequency current flows and the main body part 102 causes the main body part 102 to be heated.

Further, as in the second small-diameter part 104A, the first small-diameter part 103A and the main body part 102 are heated and then cooled by the cooling liquid L from the cooling ring 36.

As described above, when the shaft-like body 101 is subjected to traverse hardening by moving the primary coil member 11 upward with respect to the shaft-like body 101, traverse hardening can be efficiently performed not only on the main body part 102 but also on the first small-diameter part 103A and the second small-diameter part 104A.

When the shaft-like body 101 is subjected to traverse hardening by moving the primary coil member 11 upward relative to the shaft-like body 101 having the first small-diameter part 103B and the second small-diameter part 104B formed on an upper side thereof, traverse hardening of the shaft-like body 101 is performed as follows.

First, the primary coil member 11 is externally disposed around the main body part 102 and moved upward. An eddy current that is electromagnetically induced by the primary coil member 11 through which a high-frequency current flows and the main body part 102 flows in the main body part 102, and the main body part 102 is heated. Thereafter, the main body part 102 is cooled by the cooling ring 36 that moves upward following the primary coil member 11, and thereby traverse hardening of the main body part 102 is performed.

Next, when the primary coil member 11 is externally disposed around at least a part of the secondary coil member 16B externally disposed around a lower end portion of the first small-diameter part 103B, the primary coil member 11 and the secondary coil member 16B are integrally moved upward. An eddy current that is electromagnetically induced by the primary coil member 11 through which a high-frequency current flows and the secondary coil member 16B flows in the secondary coil member 16B. Then, an eddy current that is electromagnetically induced by the secondary coil member 16B and the first small-diameter part 103B flows in the first small-diameter part 103B, and thereby the first small-diameter part 103B is heated. In this way, when the secondary coil member 16B is disposed between the primary coil member 11 and the first small-diameter part 103B, an air gap between the inner circumferential surface of the primary coil member 11 and the outer circumferential surface of the first small-diameter part 103B decreases to an air gap between the outer circumferential surface of the first small-diameter part 103B and the inner circumferential surface of the secondary coil member 16B, and traverse hardening of the first small-diameter part 103B is efficiently performed.

Next, when at least a part of the primary coil member 11 and the secondary coil member 16B that move integrally is externally disposed around the tertiary coil member 26B that is externally disposed around a lower end portion of the second small-diameter part 104B, the primary coil member 11, the secondary coil member 16B, and the tertiary coil member 26B are integrally moved upward. An eddy current that is electromagnetically induced by the primary coil member 11 through which a high-frequency current flows and the secondary coil member 16B flows in the secondary coil member 16B. Then, an eddy current that is electromagnetically induced by the secondary coil member 16B and the tertiary coil member 26B flows in the tertiary coil member 26B. Then, electromagnetic induction between the tertiary coil member 26B and the second small-diameter part 104B causes the second small-diameter part 104B to be heated. In this way, when the secondary coil member 16B and the tertiary coil member 26B are disposed between the primary coil member 11 and the second small-diameter part 104B, an air gap between the inner circumferential surface of the primary coil member 11 and the outer circumferential surface of the second small-diameter part 104B decreases to an air gap between the outer circumferential surface of the second small-diameter part 104B and the inner circumferential surface of the tertiary coil member 26B, and traverse hardening of the second small-diameter part 104B is efficiently performed.

Further, as in the main body part 102, the first small-diameter part 103B and the second small-diameter part 104B are heated and then cooled by the cooling ring 36.

As described above, when the shaft-like body 101 is subjected to traverse hardening by moving the primary coil member 11 upward relative to the shaft-like body 101, traverse hardening can be efficiently performed not only on the main body part 102 but also on the first small-diameter part 103B and the second small-diameter part 104B.

The second missing part 16aA of the secondary coil member 16A and the third missing part 26aA of the tertiary coil member 26A are formed at the same position in the circumferential direction. That is, the second missing part 16aA of the secondary coil member 16A and the third missing part 26aA of the tertiary coil member 26A are formed at positions at which at least parts thereof overlap each other in the circumferential direction, and more preferably at positions at which they are completely coincident with each other in the circumferential direction. In the tertiary coil member 26A disposed on a radially inward side of the second missing part 16aA, electromagnetic induction does not easily occur because no current flows in the second missing part 16aA. When the circumferential positions of the missing parts 16aA and 26aA through which no current flows and which do not contribute to electromagnetic induction are made equal, a range in which the secondary coil member 16A and the tertiary coil member 26A overlap each other in the circumferential direction can be extended. As a result, a range that does not contribute to electromagnetic induction can be reduced.

While one embodiment of the present invention has been described in detail as above with reference to the drawings, the specific configurations are not limited only to the embodiment and includes changes, combinations, and deletions of the configurations within a range not departing from the appended claims.

For example, in the above-described embodiment, the second missing part 16aA of the secondary coil member 16A and the third missing part 26aA of the tertiary coil member 26A may be formed at different positions in the circumferential direction.

When the shaft-like body 101 includes a third small-diameter part, a fourth small-diameter part, and the like provided on a lower end portion of the second small-diameter part 104A and having diameters smaller than that of the second small-diameter part 104A, the traverse hardening device may include a fourth coil member, a fifth coil member, and the like.

When the shaft-like body 101 does not include the first small-diameter part 103B and the second small-diameter part 104B, the traverse hardening device 1 may not include the secondary coil member 16B and the tertiary coil member 26B. In this case, in the traverse hardening method S, the first small-diameter part second hardening step S9 and the second small-diameter part second hardening step S11 may not be performed.

Similarly, when the shaft-like body 101 does not include the first small-diameter part 103A and the second small-diameter part 104A, the traverse hardening device 1 may not include the secondary coil member 16A and the tertiary coil member 26A. In this case, in the traverse hardening method S, the second small-diameter part first hardening step S3 and the first small-diameter part first hardening step S5 may not be performed.

The traverse hardening device 1 may not include the support member 6 and the control unit 46.

Although the shaft-like body 101 has been described as an axle of a railway vehicle, the shaft-like body 101 may be a shaft such as a ball screw.

### (Analysis result)

Hereinafter, results of simulations on the traverse hardening device 1 of an example based on the embodiment and on a traverse hardening device of a comparative example will be described.

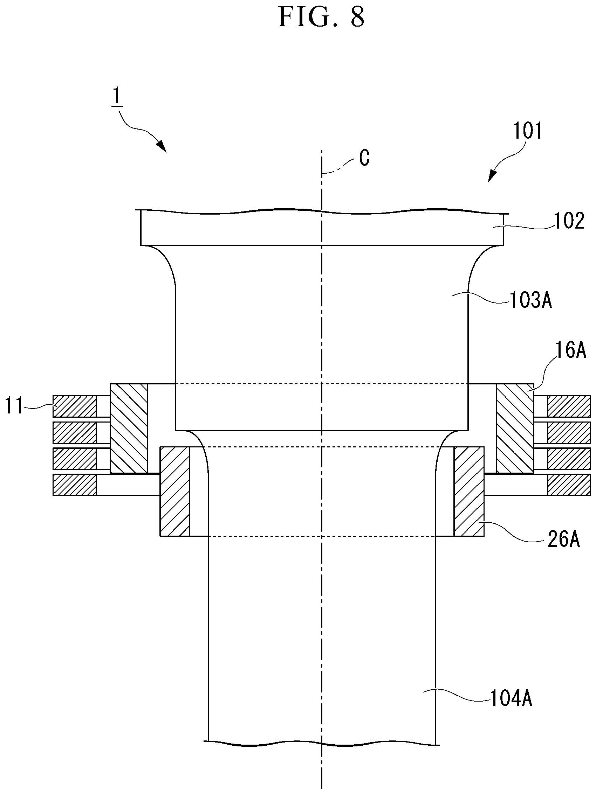

FIG. 8 illustrates an analytical model used for the simulation.

An outer diameter of the main body part 102 was 195 mm, an outer diameter (minimum diameter) of the first small-diameter part 103A was 161 mm, and an outer diameter (minimum diameter) of the second small-diameter part 104A was 131 mm. A material of the shaft-like body 101 was carbon steel. A frequency of a high-frequency current caused to flow in the primary coil member 11 was set to 1 kHz. A maximum temperature value of the shaft-like body 101 was obtained when the shaft-like body 101 was heated to an extent required for hardening it to a fixed depth using traverse hardening.

When a temperature of the shaft-like body 101 becomes excessively high (overheated) during traverse hardening, there is a problem in that a structure of the shaft-like body 101 changes. Therefore, it is preferable to suppress a maximum temperature value of the shaft-like body 101 while securing the hardening to a fixed depth with respect to the shaft-like body 101.

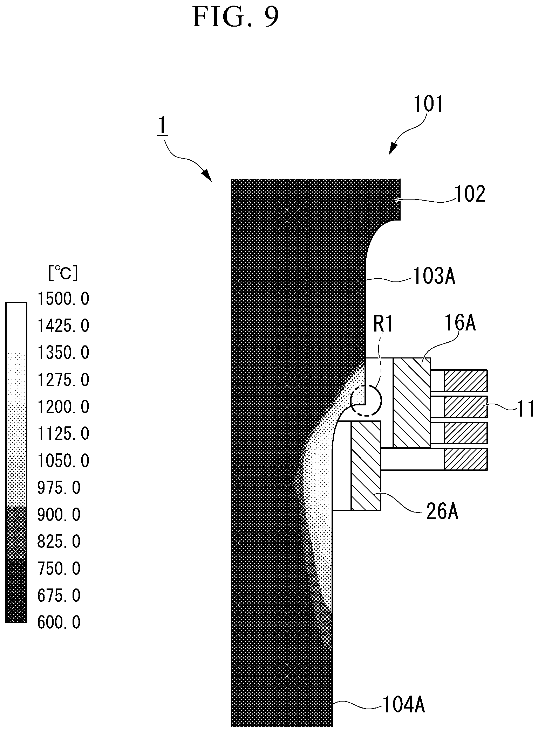

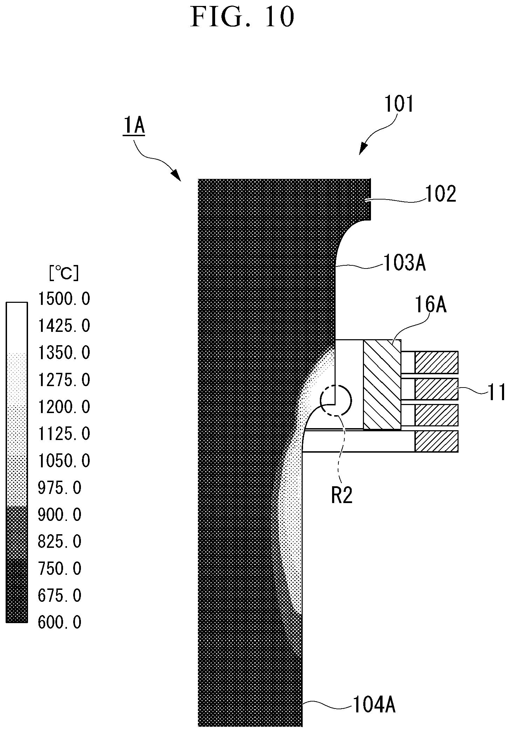

FIG. 9 illustrates a simulation result by the traverse hardening device 1 of the example. In FIG. 9 and FIG. 10 which is to be described below, temperatures corresponding to shading of gray are illustrated.

When the shaft-like body 101 was subjected to traverse hardening by the traverse hardening device 1 of the example, in a case in which a depth of at least 5.0 mm or more that could be heated to 770°C or higher was secured in the second small-diameter part 104A, it was found that a temperature of a region R1 was about 1280°C when the primary coil member 11, the secondary coil member 16A, and the tertiary coil member 26A were positioned as illustrated in FIG. 9.

FIG. 10 illustrates a simulation result by a traverse hardening device 1A of the comparative example. The traverse hardening device 1A of the comparative example does not include the tertiary coil member 26A with respect to configurations of the traverse hardening device 1 of the example. When the shaft-like body 101 was subjected to traverse hardening by the traverse hardening device 1A of the comparative example, in a case in which a depth of at least 5.0 mm or more that could be heated to 770°C or higher was secured in the second small-diameter part 104A, it was found that a temperature of a region R2 was about 1491°C.

It was found that the traverse hardening device 1 of the example could reduce the maximum temperature value of the shaft-like body 101 at the time of traverse hardening by about 211°C as compared to in the traverse hardening device 1A of the comparative example.

### [Field of Industrial Application]

According to the traverse hardening device and the traverse hardening method of the present invention, traverse hardening can be efficiently performed not only on the main body part but also on the first small-diameter part provided at the end portion of the main body part and the second small-diameter part provided at the end portion of the first small-diameter part.

### [Brief Description of the Reference Symbols]

1 Traverse hardening device
11 Primary coil member
16A, 16B Secondary coil member
26A, 26B Tertiary coil member
101 Shaft-like body
102 Main body part
103A, 103B First small-diameter part
104A, 104B Second small-diameter part
C Axis
D1 One side (the other side)
D2 The other side (one side)
S Traverse hardening method

## Claims

1. A traverse hardening device (1) for performing traverse hardening on a shaft-like body (101), the shaft-like body (101) including:
a main body part (102);
a first small-diameter part (103A,103B) provided at an end portion of the main body part (102) on one side (D1) in an axial direction and having an outer diameter smaller than that of the main body part (102); and
a second small-diameter part (104A, 104B) provided at an end portion of the first small-diameter part (103A, 103B) on one side (D1) in the axial direction and having an outer diameter smaller than that of the first small-diameter part (103A, 103B),
the traverse hardening device (1) comprising:
a primary coil member (11) which is formed in an annular shape, through which a high-frequency current is caused to flow, and which is externally disposed around the main body part (102);
a secondary coil member (16A,16B) formed in an annular shape, externally disposed around the first small-diameter part (103A,103B) of the shaft-like body (101), and being able to be disposed in the primary coil member (11); and
a tertiary coil member (26A,26B) formed in an annular shape, externally disposed around the second small-diameter part (104A, 104B) of the shaft-like body (101), and being able to be disposed in the secondary coil member (16A,16B).

2. The traverse hardening device (1) according to claim 1, wherein
a second missing part is formed at a part in a circumferential direction of the secondary coil member (16A,16B),
a third missing part is formed at a part in the circumferential direction of the tertiary coil member (26A,26B), and
a circumferential position of the second missing part and a circumferential position of the third missing part overlap each other at least in a part.

3. A traverse hardening method which is a method of performing traverse hardening on a shaft-like body (101), the shaft-like body (101) including:
a main body part (102);
a first small-diameter part (103A,103B) provided at an end portion of the main body part (102) on one side (D1) in an axial direction and having an outer diameter smaller than that of the main body part (102); and
a second small-diameter part (104A, 104B) provided at an end portion of the first small-diameter part (103A, 103B) on one side (D1) in the axial direction and having an outer diameter smaller than that of the first small-diameter part (103A, 103B),
the traverse hardening method comprising:
heating the second small-diameter part (104A,104B) using induction heating by causing a tertiary coil member (26A,26B) formed in an annular shape to be externally disposed around an end portion of the second small-diameter part (104A,104B) on one side (D1) in the axial direction, causing at least a part of a secondary coil member (16A,16B) formed in an annular shape to be externally disposed around the tertiary coil member (26A,26B), causing at least a part of a primary coil member (11) which is formed in an annular shape and through which a high-frequency current is caused to flow to be externally disposed around the secondary coil member (16A,16B), and moving the tertiary coil member (26A,26B), the secondary coil member (16A, 16B), and the primary coil member (11) integrally to the other side (D2) in the axial direction;
heating the first small-diameter part (103A,103B) using induction heating by moving the secondary coil member (16A, 16B) and the primary coil member (11) integrally to the other side (D2) in the axial direction in a state in which the tertiary coil member (26A,26B) is externally disposed around an end portion of the second small-diameter part (104A, 104B) on the other side (D2) in the axial direction or the tertiary coil member (26A,26B) is retreated to one side (D1) in the axial direction; and
heating the main body part (102) using induction heating by moving the primary coil member (11) to the other side (D2) in the axial direction in a state in which the secondary coil member (16A,16B) is externally disposed around an end portion of the first small-diameter part (103A, 103B) on the other side (D2) in the axial direction or the secondary coil member (16A,16B) is retreated to one side (D1) in the axial direction.

4. A traverse hardening method (S) which is a method of performing traverse hardening on a shaft-like body (101), the shaft-like body (101) including:
a main body part (102);
a first small-diameter part (103A,103B) provided at an end portion of the main body part (102) on one side (D1) in an axial direction and having an outer diameter smaller than that of the main body part (102); and
a second small-diameter part (104A, 104B) provided at an end portion of the first small-diameter part (103A, 103B) on one side (D1) in the axial direction and having an outer diameter smaller than that of the first small-diameter part (103A, 103B),
the traverse hardening method comprising:
heating the main body part (102) using induction heating by moving a primary coil member (11) to one side (D1) in the axial direction while a secondary coil member (16A,16B) formed in an annular shape is externally disposed around an end portion of the first small-diameter part (103A,103B) on the other side (D2) in the axial direction, a tertiary coil member (26A,26B) formed in an annular shape is externally disposed around an end portion of the secondary small-diameter part on the other side (D2) in the axial direction, and the primary coil member (11) which is formed in an annular shape and through which a high-frequency current is caused to flow is externally disposed around the main body part (102);
heating the first small-diameter part (103A,103B) using induction heating by moving the primary coil member (11) and the secondary coil member (16A, 16B) integrally to one side (D1) in the axial direction when at least a part of the secondary coil member (16A,16B) is disposed in the primary coil member (11); and
heating the second small-diameter part (104A,104B) using induction heating by moving the primary coil member (11), the secondary coil member (16A,16B), and the tertiary coil member (26A,26B) integrally to one side (D1) in the axial direction when at least a part of the tertiary coil member (26A,26B) is disposed in the secondary coil member (16A,16B).

## Patentansprüche

1. Querhärtevorrichtung (1) zum Durchführen des Querhärtens an einem wellenartigen Körper (101), wobei der wellenartige Körper (101) umfasst:
einen Hauptkörperteil (102);
ein erstes Teil (103A, 103B) mit kleinem Durchmesser, das an einem Endabschnitt des Hauptkörperteils (102) auf einer Seite (D1) in einer axialen Richtung vorgesehen ist und einen Außendurchmesser hat, der kleiner ist als der des Hauptkörperteils (102); und
ein zweites Teil (104A, 104B) mit kleinem Durchmesser, das an einem Endabschnitt des ersten Teils (103A, 103B) mit kleinem Durchmesser auf einer Seite (D1) in der axialen Richtung vorgesehen ist und einen Außendurchmesser hat, der kleiner als der des ersten Teils (103A, 103B) mit kleinem Durchmesser ist,
wobei die Querhärtevorrichtung (1) umfasst:
ein primäres Spulenelement (11), das in einer Ringform ausgebildet ist, durch das ein Hochfrequenzstrom zum Fließen gebracht wird, und das außen um den Hauptkörperteil (102) herum angeordnet ist;
ein sekundäres Spulenelement (16A, 16B), das in einer Ringform ausgebildet ist, außen um das erste Teil (103A, 103B) mit kleinem Durchmesser des wellenartigen Körpers (101) angeordnet ist, und in dem primären Spulenelement (11) angeordnet werden kann; und
ein tertiäres Spulenelement (26A, 26B), das in einer Ringform ausgebildet ist, außen um das zweite Teil (104A, 104B) mit kleinem Durchmesser des wellenartigen Körpers (101) angeordnet ist, und in dem sekundären Spulenelement (16A, 16B) angeordnet werden kann.

2. Querhärtevorrichtung (1) nach Anspruch 1, wobei
ein zweiter fehlender Teil an einem Teil in einer Umfangsrichtung des sekundären Spulenelements (16A, 16B) ausgebildet ist,
ein dritter fehlender Teil an einem Teil in der Umfangsrichtung des tertiären Spulenelements (26A, 26B) ausgebildet ist, und
eine Umfangsposition des zweiten fehlenden Teils und eine Umfangsposition des dritten fehlenden Teils einander zumindest in einem Teil überlappen.

3. Verfahren zum Querhärten, das ein Verfahren zum Durchführen des Querhärtens an einem wellenartigen Körper (101) ist, wobei der wellenartige Körper (101) umfasst:
einen Hauptkörperteil (102);
ein erstes Teil (103A, 103B) mit kleinem Durchmesser, das an einem Endabschnitt des Hauptkörperteils (102) auf einer Seite (D1) in einer axialen Richtung vorgesehen ist und einen Außendurchmesser hat, der kleiner ist als der des Hauptkörperteils (102); und
ein zweites Teil (104A, 104B) mit kleinem Durchmesser, das an einem Endabschnitt des ersten Teils (103A, 103B) mit kleinem Durchmesser auf einer Seite (D1) in der axialen Richtung vorgesehen ist und einen Außendurchmesser hat, der kleiner als der des ersten Teils (103A, 103B) mit kleinem Durchmesser ist,
wobei das Verfahren des Querhärtens umfasst:
Erwärmen des zweiten Teils (104A, 104B) mit kleinem Durchmesser unter Verwendung von Induktionserwärmung durch Bewirken, dass ein tertiäres Spulenelement (26A, 26B), das in einer Ringform ausgebildet ist, außen um einen Endabschnitt des zweiten Teils (104A, 104B) mit kleinem Durchmesser auf einer Seite (D1) in der axialen Richtung angeordnet wird, Bewirken, dass mindestens ein Teil eines sekundären Spulenelements (16A, 16B), das in einer Ringform ausgebildet ist, außen um das tertiäre Spulenelement (26A, 26B) angeordnet wird, wobei bewirkt wird, dass zumindest ein Teil eines primären Spulenelements (11), das in einer Ringform ausgebildet ist und durch das ein Hochfrequenzstrom zum Fließen gebracht wird, außen um das sekundäre Spulenelement (16A, 16B) angeordnet wird, und das tertiäre Spulenelement (26A, 26B), das sekundäre Spulenelement (16A, 16B) und das primäre Spulenelement (11) integral zur anderen Seite (D2) in axialer Richtung bewegt werden;
Erwärmen des ersten Teils (103A, 103B) mit kleinem Durchmesser unter Verwendung von Induktionserwärmung durch Bewegen des sekundären Spulenelements (16A, 16B) und des primären Spulenelements (11) integral zur anderen Seite (D2) in der axialen Richtung in einem Zustand, in dem das tertiäre Spulenelement (26A, 26B) außen um einen Endabschnitt des zweiten Teils (104A, 104B) mit kleinem Durchmesser auf der anderen Seite (D2) in der axialen Richtung angeordnet ist oder das tertiäre Spulenelement (26A, 26B) auf eine Seite (D1) in der axialen Richtung zurückgezogen ist; und
Erwärmen des Hauptkörperteils (102) unter Verwenden von Induktionserwärmung durch Bewegen des primären Spulenelements (11) auf die andere Seite (D2) in der axialen Richtung in einem Zustand, in dem das sekundäre Spulenelement (16A, 16B) außen um einen Endabschnitt des ersten Teils (103A, 103B) mit kleinem Durchmesser auf der anderen Seite (D2) in der axialen Richtung angeordnet ist oder das sekundäre Spulenelement (16A, 16B) auf eine Seite (D1) in der axialen Richtung zurückgezogen ist.

4. Verfahren zum Querhärten (S), das ein Verfahren zum Durchführen des Querhärtens an einem wellenartigen Körper (101) ist, wobei der wellenartige Körper (101) umfasst:
einen Hauptkörperteil (102);
ein erstes Teil (103A, 103B) mit kleinem Durchmesser, das an einem Endabschnitt des Hauptkörperteils (102) auf einer Seite (D1) in einer axialen Richtung vorgesehen ist und einen Außendurchmesser hat, der kleiner als der des Hauptkörperteils (102) ist; und
ein zweites Teil (104A, 104B) mit kleinem Durchmesser, das an einem Endabschnitt des ersten Teils (103A, 103B) mit kleinem Durchmesser auf einer Seite (D1) in der axialen Richtung vorgesehen ist und einen Außendurchmesser hat, der kleiner als der des ersten Teils (103A, 103B) mit kleinem Durchmesser ist,
wobei das Verfahren zum Querhärten umfasst:
Erwärmen des Hauptkörperteils (102) unter Verwendung von Induktionserwärmung durch Bewegen eines primären Spulenelements (11) zu einer Seite (D1) in der axialen Richtung, während ein sekundäres Spulenelement (16A, 16B), das in einer Ringform ausgebildet ist, außen um einen Endabschnitt des ersten Teils (103A, 103B) mit kleinem Durchmesser auf der anderen Seite (D2) in der axialen Richtung angeordnet ist, ein tertiäres Spulenelement (26A, 26B), das in einer Ringform ausgebildet ist, außen um einen Endabschnitt des sekundären Teils mit kleinem Durchmesser auf der anderen Seite (D2) in der axialen Richtung angeordnet ist, und das primäre Spulenelement (11), das in einer Ringform ausgebildet ist und durch das ein Hochfrequenzstrom zum Fließen gebracht wird, außen um den Hauptkörperteil (102) angeordnet ist;
Erwärmen des ersten Teils (103A, 103B) mit kleinem Durchmesser unter Verwenden von Induktionserwärmung durch Bewegen des primären Spulenelements (11) und des sekundären Spulenelements (16A, 16B) integral zu einer Seite (D1) in der axialen Richtung, wenn mindestens ein Teil des sekundären Spulenelements (16A, 16B) in dem primären Spulenelement (11) angeordnet ist; und
Erwärmen des zweiten Teils (104A, 104B) mit kleinem Durchmesser unter Verwendung von Induktionserwärmung durch Bewegen des primären Spulenelements (11), des sekundären Spulenelements (16A, 16B) und des tertiären Spulenelements (26A, 26B) integral zu einer Seite (D1) in der axialen Richtung, wenn mindestens ein Teil des tertiären Spulenelements (26A, 26B) in dem sekundären Spulenelement (16A, 16B) angeordnet ist.

## Revendications

1. Dispositif de durcissement transversal (1) pour réaliser un durcissement transversal sur un corps analogue à un arbre (101), le corps analogue à un arbre (101) incluant:
une partie formant corps principal (102);
une première partie de petit diamètre (103A, 103B) disposée au niveau d'une partie d'extrémité de la partie formant corps principal (102) sur un côté (D1) dans une direction axiale et ayant un diamètre extérieur plus petit que celui de la partie formant corps principal (102); et
une deuxième partie de petit diamètre (104A, 104B) disposée au niveau d'une partie d'extrémité de la première partie de petit diamètre (103A, 103B) sur un côté (D1) dans la direction axiale et ayant un diamètre extérieur plus petit que celui de la première partie de petit diamètre (103A, 103B),
le dispositif de durcissement transversal (1) comprenant:
un élément formant bobine primaire (11) qui est formé dans une forme annulaire, à travers lequel un courant haute fréquence est amené à circuler, et qui est disposé extérieurement autour de la partie formant corps principal (102);
un élément formant bobine secondaire (16A, 16B) formé dans une forme annulaire, disposé extérieurement autour de la première partie de petit diamètre (103A, 103B) du corps analogue à un arbre (101), et étant capable d'être disposé dans l'élément formant bobine primaire (11); et
un élément formant bobine tertiaire (26A, 26B) formé dans une forme annulaire, disposé extérieurement autour de la deuxième partie de petit diamètre (104A, 104B) du corps analogue à un arbre (101), et étant capable d'être disposé dans l'élément formant bobine secondaire (16A, 16B).

2. Dispositif de durcissement transversal (1) selon la revendication 1, dans lequel
une deuxième partie manquante est formée au niveau d'une partie dans une direction circonférentielle de l'élément formant bobine secondaire (16A, 16B),
une troisième partie manquante est formée au niveau d'une partie dans la direction circonférentielle de l'élément formant bobine tertiaire (26A, 26B), et
une position circonférentielle de la deuxième partie manquante et une position circonférentielle de la troisième partie manquante se chevauchent au moins en partie.

3. Procédé de durcissement transversal qui est un procédé de réalisation d'un durcissement transversal sur un corps analogue à un arbre (101), le corps analogue à un arbre (101) incluant:
une partie formant corps principal (102);
une première partie de petit diamètre (103A, 103B) disposée au niveau d'une partie d'extrémité de la partie formant corps principal (102) sur un côté (D1) dans une direction axiale et ayant un diamètre extérieur plus petit que celui de la partie formant corps principal (102); et
une deuxième partie de petit diamètre (104A, 104B) disposée au niveau d'une partie d'extrémité de la première partie de petit diamètre (103A, 103B) sur un côté (D1) dans la direction axiale et ayant un diamètre extérieur plus petit que celui de la première partie de petit diamètre (103A, 103B),
le procédé de durcissement transversal comprenant:
le chauffage de la deuxième partie de petit diamètre (104A, 104B) à l'aide d'un chauffage par induction en amenant un élément formant bobine tertiaire (26A, 26B) formé dans une forme annulaire à être disposé extérieurement autour d'une partie d'extrémité de la deuxième partie de petit diamètre (104A, 104B) sur un côté (D1) dans la direction axiale, amenant au moins une partie d'un élément formant bobine secondaire (16A, 16B) formé dans une forme annulaire à être disposée extérieurement autour de l'élément formant bobine tertiaire (26A, 26B), amenant au moins une partie d'un élément formant bobine primaire (11) qui est formé dans une forme annulaire et à travers lequel un courant haute fréquence est amené à circuler à être disposée extérieurement autour de l'élément formant bobine secondaire (16A, 16B), et déplaçant l'élément formant bobine tertiaire (26A, 26B), l'élément formant bobine secondaire (16A, 16B) et l'élément formant bobine primaire (11) de manière solidaire jusqu'à l'autre côté (D2) dans la direction axiale;
le chauffage de la première partie de petit diamètre (103A, 103B) à l'aide d'un chauffage par induction en déplaçant l'élément formant bobine secondaire (16A, 16B) et l'élément formant bobine primaire (11) de manière solidaire jusqu'à l'autre côté (D2) dans la direction axiale dans un état dans lequel l'élément formant bobine tertiaire (26A, 26B) est disposé extérieurement autour d'une partie d'extrémité de la deuxième partie de petit diamètre (104A, 104B) sur l'autre côté (D2) dans la direction axiale ou l'élément formant bobine tertiaire (26A, 26B) est ramené jusqu'à un côté (D1) dans la direction axiale; et
le chauffage de la partie formant corps principal (102) à l'aide d'un chauffage par induction en déplaçant l'élément formant bobine primaire (11) jusqu'à l'autre côté (D2) dans la direction axiale dans un état dans lequel l'élément formant bobine secondaire (16A, 16B) est disposé extérieurement autour d'une partie d'extrémité de la première partie de petit diamètre (103A, 103B) sur l'autre côté (D2) dans la direction axiale ou l'élément formant bobine secondaire (16A, 16B) est ramené jusqu'à un côté (D1) dans la direction axiale.

4. Procédé de durcissement transversal (S) qui est un procédé de réalisation d'un durcissement transversal sur un corps analogue à un arbre (101), le corps analogue à un arbre (101) incluant:
une partie formant corps principal (102);
une première partie de petit diamètre (103A, 103B) disposée au niveau d'une partie d'extrémité de la partie formant corps principal (102) sur un côté (D1) dans une direction axiale et ayant un diamètre extérieur plus petit que celui de la partie formant corps principal (102); et
une deuxième partie de petit diamètre (104A, 104B) disposée au niveau d'une partie d'extrémité de la première partie de petit diamètre (103A, 103B) sur un côté (D1) dans la direction axiale et ayant un diamètre extérieur plus petit que celui de la première partie de petit diamètre (103A, 103B),
le procédé de durcissement transversal comprenant:
le chauffage de la partie formant corps principal (102) à l'aide d'un chauffage par induction en déplaçant un élément formant bobine primaire (11) jusqu'à un côté (D1) dans la direction axiale tandis qu'un élément formant bobine secondaire (16A, 16B) formé dans une forme annulaire est disposé extérieurement autour d'une partie d'extrémité de la première partie de petit diamètre (103A, 103B) sur l'autre côté (D2) dans la direction axiale, un élément formant bobine tertiaire (26A, 26B) formé dans une forme annulaire est disposé extérieurement autour d'une partie d'extrémité de la partie de petit diamètre secondaire sur l'autre côté (D2) dans la direction axiale, et l'élément formant bobine primaire (11) qui est formé dans une forme annulaire et à travers lequel un courant haute fréquence est amené à circuler est disposé extérieurement autour de la partie formant corps principal (102);
le chauffage de la première partie de petit diamètre (103A, 103B) à l'aide d'un chauffage par induction en déplaçant l'élément formant bobine primaire (11) et l'élément formant bobine secondaire (16A, 16B) de manière solidaire jusqu'à un côté (D1) dans la direction axiale lorsqu'au moins une partie de l'élément formant bobine secondaire (16A, 16B) est disposée dans l'élément formant bobine primaire (11); et
le chauffage de la deuxième partie de petit diamètre (104A, 104B) à l'aide d'un chauffage par induction en déplaçant l'élément formant bobine primaire (11), l'élément formant bobine secondaire (16A, 16B) et l'élément formant bobine tertiaire (26A, 26B) de manière solidaire jusqu'à un côté (D1) dans la direction axiale lorsqu'au moins une partie de l'élément formant bobine tertiaire (26A, 26B) est disposée dans l'élément formant bobine secondaire (16A, 16B).
